# EUROPÄISCHE PATENTANMELDUNG

(11) **EP 4 442 108 A1**
(43) Veröffentlichungstag der Anmeldung: **09.10.2024**
(21) Anmeldenummer: 24162862.7
(22) Anmeldetag: 12.03.2024
(51) Int. Cl.: A01F 15/07

(54) **RUNDBALLENPRESSE**

(30) Priorität: 06.04.2023 DE 102023108943
(71) Anmelder: Maschinenfabrik Bernard Krone GmbH & Co. KG, 48480 Spelle (DE)
(72) Erfinder: Kracht, Katharina, 49832 Andervenne (DE); Smoes, Henning, 49828 Neuenhaus (DE)

(57) **Zusammenfassung**

Die Erfindung betrifft eine Rundballenpresse, mit einem Rahmen, einer Pressvorrichtung zum Pressen von landwirtschaftlichem Erntegut zu einem Ballen in einer Presskammer, sowie einer Bindeeinheit, die gegenüber dem Rahmen verstellbar ist zwischen einer Betriebsposition und einer Ladeposition und die ein Bindegehäuse aufweist, eine wenigstens teilweise im Bindegehäuse angeordnete Rollenaufnahme zur drehbaren Aufnahme einer Bindematerialrolle, sowie eine Ladehilfe, die gegenüber dem Bindegehäuse verstellbar ist zwischen einer Stützposition, in welcher die Bindematerialrolle auf ihr abstützbar ist, und einer Normalposition. Um bei einer Rundballenpresse das Einsetzen einer Bindematerialrolle in eine Bindeeinheit zu erleichtern, ist erfindungsgemäß vorgesehen, dass ein Kopplungsmechanismus derart mit der Ladehilfe zusammenwirkt, dass beim Verstellen der Bindeeinheit aus der Ladeposition in die Betriebsposition die Ladehilfe durch den Kopplungsmechanismus in die Normalposition verstellt wird.

## Beschreibung

Die vorliegende Erfindung betrifft eine Rundballenpresse nach dem Oberbegriff von Anspruch 1.

Rundballenpressen werden in der Landwirtschaft eingesetzt, um Erntegut wie zum Beispiel Gras, Heu oder Stroh aufzunehmen und zu Ballen zu verpressen. Das Erntegut wird (zum Beispiel durch eine Pick-up) vom Boden aufgenommen, weitergefördert, normalerweise zerkleinert (zum Beispiel mittels eines Schneidrotors) und schließlich in einer Presskammer zu runden, annähernd zylinderförmigen Erntegutballen verpresst, die anschließend mit einem Bindematerial umwickelt werden. Rundballenpressen weisen regelmäßig eine Bindeeinheit auf, die zur Aufnahme einer Bindematerialrolle oder dergleichen ausgebildet ist, sowie dazu, das Bindematerial zur Presskammer zuzuführen, zum Beispiel mittels eines beweglichen Zuführschnabels, der ein Ende des Bindematerials erfasst. Das zugeführte Bindematerial kann dann zum Binden des gepressten Ballens genutzt werden. Als Bindematerial können Schnüre, Netze oder (zum Beispiel im Falle von Gras) Folien verwendet werden. Zusätzlich kann der bereits gebundene Erntegutballen außerhalb der Rundballenpresse in einem hiervon separaten Ballenwickelgerät mit einer Wickelfolie umwickelt und versiegelt werden, so dass zum Beispiel Silage im Ballen gebildet und gelagert werden kann.

Um eine Bindematerialrolle in die Bindeeinheit einzusetzen und/oder aus dieser herauszunehmen ist es im Stand der Technik bekannt, die Bindeeinheit in eine Position zu verstellen, in welcher der Benutzer leichter Zugriff nehmen kann. Dabei kann die Bindeeinheit nach vorne und/oder abwärts verstellt werden. Außerdem ist es bekannt, die Bindeeinheit mit einer verstellbaren Ladehilfe zu versehen, die zum Beispiel schwenkbar mit einem Bindegehäuse der Bindeeinheit verbunden sein kann. Zum Beladen der Bindeeinheit wird die Ladehilfe abwärts geschwenkt, so dass sie die Bindematerialrolle aufnehmen und abstützen kann. Unter Umständen kann die Bindematerialrolle von der Seite auf die Ladehilfe aufgeschoben werden. Dann wird die Ladehilfe mit der Bindematerialrolle aufwärts geschwenkt, so dass letztere in eine Rollenaufnahme der Bindeeinheit eingebracht wird. Die Ladehilfe wird arretiert und bildet somit eine zusätzliche Absicherung der Bindematerialrolle. Beim Entladen muss die Ladehilfe entriegelt und abwärtsgeschwenkt werden, bevor die Bindematerialrolle aus der Rollenaufnahme heraus und auf die Ladehilfe befördert werden kann. Um die Bindematerialrolle in die Rollenaufnahme zu befördern, muss der Benutzer die Ladehilfe mit der Bindematerialrolle händisch schwenken, was im Allgemeinen mühsam ist, da die Masse einer vollen Bindematerialrolle typischerweise zwischen 40 und 50 kg, in einigen Fällen auch bei bis zu 100 kg liegt. Nach dem Einbringen der Bindematerialrolle in die Rollenaufnahme muss die Bindeeinheit wieder in eine für den Normalbetrieb geeignete Position verstellt werden. Der gesamte Vorgang ist unter Umständen kompliziert und zeitaufwändig.

Aufgabe der Erfindung ist es, bei einer Rundballenpresse das Einsetzen einer Bindematerialrolle in eine Bindeeinheit zu vereinfachen.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen, mit einem Rahmen, einer Pressvorrichtung zum Pressen von landwirtschaftlichem Erntegut zu einem Ballen in einer Presskammer, sowie einer Bindeeinheit, die gegenüber dem Rahmen verstellbar ist zwischen einer Betriebsposition und einer Ladeposition und die ein Bindegehäuse aufweist, eine wenigstens teilweise im Bindegehäuse angeordnete Rollenaufnahme zur drehbaren Aufnahme einer Bindematerialrolle, sowie eine Ladehilfe, die gegenüber dem Bindegehäuse verstellbar ist zwischen einer Stützposition, in welcher die Bindematerialrolle auf ihr abstützbar ist, und einer Normalposition.

Die Rundballenpresse ist zum Pressen von landwirtschaftlichem Erntegut zu (Rund-) Ballen ausgebildet. Sie kann selbstfahrend ausgebildet sein oder dazu vorgesehen sein, von einem Schlepper gezogen zu werden. Bei dem landwirtschaftlichen Erntegut kann es sich insbesondere um Halmgut wie Gras, Stroh oder Heu handeln, aber zum Beispiel auch um Häckselmais. Sie weist einen Rahmen auf, der die Grundstruktur der Rundballenpresse bildet und ihr insgesamt Stabilität verleiht. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile, namentlich die Pressvorrichtung, nach außen abschirmt.

Der eigentliche Pressvorgang erfolgt innerhalb der Presskammer durch die Pressvorrichtung, welche wenigstens teilweise, ggf. auch vollständig, innerhalb eines Rahmens angeordnet sein kann. Die Presskammer, in der die Ballenbildung und das Pressen des Ballens erfolgen, ist wenigstens teilweise durch die Pressvorrichtung begrenzt oder definiert. Die Pressvorrichtung weist typischerweise wenigstens ein gegenüber dem Rahmen bewegliches Presselement (normalerweise eine Mehrzahl von Presselementen) auf. Das Erntegut kann mit einer Pick-up aufgenommen werden und mit einer Fördervorrichtung, zum Beispiel einem Förderrotor, weiter in Richtung der Presskammer gefördert werden. Statt einer einfachen Fördervorrichtung oder zusätzlich zu dieser kann eine Schneidvorrichtung vorgesehen sein, die das Erntegut nicht nur weiterfördert, sondern auch schneidet. Normalerweise weist die Rundballenpresse einen Zuführkanal auf, den der Erntegutstrom durchläuft, bevor er zur Presskammer gelangt.

Weiterhin weist die Rundballenpresse eine Bindeeinheit auf. Diese dient dazu, einen Bindevorgang einzuleiten, bei dem ein Ballen nach seiner Formung mit Bindematerial versehen wird, zum Beispiel mit wenigstens einer Schnur, einem Netz oder einer Folie. Die Bindeeinheit kann bezüglich einer Längsachse vorderseitig der Presskammer angeordnet sein, das heißt die Bindeeinheit kann in Fahrtrichtung an beziehungsweise vor der Vorderseite der Presskammer angeordnet sein. Es sind aber auch andere Anordnungen denkbar, zum Beispiel oberhalb der Presskammer und/oder bezüglich der Längsachse hinterseitig der Presskammer. Hier und im Folgenden beziehen sich Aussagen hinsichtlich der Längsachse, der Querachse und der Hochachse immer auf die Ballenpresse, wobei die Längsachse entgegen der Fahrtrichtung nach hinten, die Querachse in Fahrtrichtung gesehen nach rechts und die Hochachse nach oben weist. Die Bindeeinheit ist direkt oder indirekt mit dem Rahmen verbunden. Insbesondere kann sie mit einer Bindungsbrücke verbunden sein, die Teil des Rahmens ist oder zumindest starr mit dem Rahmen verbunden ist. Die Bindeeinheit ist gegenüber dem Rahmen verstellbar zwischen einer Betriebsposition und einer Ladeposition. Die Bindeeinheit kann manuell zwischen der Ladeposition und der Betriebsposition verstellbar sein. Insbesondere kann sie aber auch aktorisch zwischen den genannten Positionen verstellbar sein. Letztere Möglichkeit vereinfacht die Handhabung für den Benutzer. Die Ladeposition ist typischerweise dafür vorgesehen, eine bessere Zugänglichkeit der Bindeeinheit zu ermöglichen, so dass eine Bindematerialrolle ein- oder ausgeladen werden kann. Zusätzlich kann sie allerdings auch wenigstens zeitweise während des Betriebs der Rundballenpresse eingenommen werden. Die Betriebsposition ist für den Betrieb der Bindeeinheit vorgesehen. Das Verstellen der Bindeeinheit kann durch eine translatorische Verschiebung und/oder eine rotatorische Schwenkbewegung erfolgen. Eine entsprechende Bindeeinheit-Schwenkachse kann zum Beispiel parallel zur Querachse verlaufen. Es ist beispielsweise aber auch eine parallel zur Hochachse verlaufende, seitlich angeordnete Bindeeinheit-Schwenkachse denkbar, wodurch die Bindeeinheit zur Seite geschwenkt werden kann.

Die Bindeeinheit weist ein Bindegehäuse auf. Dieses bildet ein stabiles Gerüst, an welchem andere Komponenten der Bindeeinheit starr oder beweglich angeordnet sein können. Das Gehäuse ist normalerweise in sich starr ausgebildet und kann aus einer Mehrzahl von starr verbundenen Teilen bestehen. Der Begriff "Gehäuse" ist nicht dahingehend auszulegen, dass dieses überwiegend geschlossen ausgebildet sein muss. Man kann auch von einem Binderahmen sprechen. Bei einigen Ausführungsformen ist das Bindegehäuse klar abgegrenzt, insbesondere von einem oben genannten Gehäuse, das die Presskammer umschließt. Bei anderen Ausführungsformen können diese beiden Gehäuse wenigstens teilweise einteilig miteinander ausgebildet sein. Sie können dabei ohne klare Abgrenzung ineinander übergehen. In diesem Fall bildet das Bindegehäuse einen Abschnitt oder einen Teil eines Gesamtgehäuses. Entsprechend sind auch Ausführungsformen denkbar, in denen das Bindegehäuse wenigstens teilweise einteilig mit dem oben genannten Rahmen der Rundballenpresse ausgebildet ist. Mit Bezug auf die oben erläuterte Verstellbarkeit der Bindeeinheit kann insbesondere das Bindegehäuse gegenüber dem Rahmen zwischen einer Betriebsposition und einer Ladeposition verstellbar sein.

Weiterhin weist die Bindeeinheit eine wenigstens teilweise im Bindegehäuse angeordnete Rollenaufnahme auf, zur drehbaren Aufnahme einer Bindematerialrolle. Die Rollenaufnahme ist dazu eingerichtet, eine Bindematerialrolle aufzunehmen. Die Bindematerialrolle, welche streng genommen nicht Teil der Bindeeinheit ist, weist normalerweise einen zylindrischen Rollenkern auf, der zum Beispiel aus Pappe oder Kunststoff bestehen kann. Auf diesen Rollenkern ist das Bindematerial aufgewickelt, zum Beispiel ein Netz oder eine Folie. Insgesamt ist die Bindematerialrolle normalerweise annähernd zylinderförmig ausgebildet, wobei die aktuelle Form auch davon abhängen kann, wie viel Bindematerial bereits abgewickelt wurde. Die Rollenaufnahme ist derart ausgebildet, dass die Bindematerialrolle drehbar aufgenommen werden kann, das heißt die Bindematerialrolle kann um eine Bindematerialrollenachse, die einer Symmetrieachse der Bindematerialrolle entsprechen kann, gedreht werden. Typischerweise verläuft diese Bindematerialrollenachse parallel zu einer Querachse der Rundballenpresse. Die Rollenaufnahme kann ganz oder teilweise innerhalb des Bindegehäuses angeordnet sein.

Außerdem weist die Rundballenpresse eine Ladehilfe auf, die gegenüber dem Bindegehäuse verstellbar ist zwischen einer Stützposition, in welcher die Bindematerialrolle auf ihr abstützbar ist, und einer Normalposition. Die Ladehilfe kann als Teil der Bindeeinheit angesehen werden. Sie ist dazu ausgebildet, in der Stützposition die Bindematerialrolle abzustützen. Das heißt in dieser Position bildet sie eine Unterstützung und/oder Aufnahme für die Bindematerialrolle. Vorteilhaft ist die Bindematerialrolle ausschließlich durch die Ladehilfe abstützbar, wenn diese in der Stützposition ist. Abgesehen von der reinen Stützfunktion kann sie ein Auf- und Abladen der Bindematerialrolle von der Seite (also bezüglich der Querachse der Rundballenpresse seitlich) unterstützen, wenn sie eine Mehrzahl von Rollen aufweist, die um Achsen drehbar sind, die zum Beispiel parallel zur Längsachse verlaufen. Vorteilhaft ist die Bindematerialrolle bezüglich der Längsachse vor der Rollenaufnahme auf der Ladehilfe abstützbar. In der Normalposition ist die Ladehilfe evtl. nicht zum unterseitigen Abstützen der Bindematerialrolle eingerichtet, wenngleich sie diese ggf. in horizontaler Richtung absichern kann. Unter Umständen könnte sie die Bindematerialrolle in der Normalposition anteilig von unten abstützen, also gemeinsam mit wenigstens einem weiteren Element. Die Normalposition kann während des Betriebs der Rundballenpresse eingenommen werden, also wenn eine Bindematerialrolle in der Rollenaufnahme aufgenommen ist und die Bindeeinheit insoweit betriebsbereit ist. Ansonsten dient der Begriff "Normalposition" vorrangig zur Unterscheidung und ist nicht einschränkend auszulegen. Je nach Ausführungsform kann die Ladehilfe in der Normalposition aufgestellt sein, so dass man von einer Aufstellposition sprechen kann, und/oder sie kann so angeordnet sein, dass sie die Bindematerialrolle zurückhalten kann, so dass man von einer Rückhalteposition oder Sicherungsposition sprechen kann. Eine derartige Anordnung der Ladehilfe in der Normalposition ist allerdings nicht erfindungswesentlich. Bevorzugt ist die Ladehilfe in der Normalposition gegenüber dem Bindegehäuse arretierbar.

Erfindungsgemäß wirkt ein Kopplungsmechanismus derart mit der Ladehilfe zusammen, dass beim Verstellen der Bindeeinheit aus der Ladeposition in die Betriebsposition die Ladehilfe durch den Kopplungsmechanismus in die Normalposition verstellt wird. Der Kopplungsmechanismus ist Teil der Rundballenpresse und kann zusammen mit der Bindeeinheit als Teil einer Bindeanordnung angesehen werden. Er wirkt mit der Ladehilfe zusammen und ist somit zumindest zeitweise mit ihr verbunden. Typischerweise ist er permanent mit der Ladehilfe verbunden, bevorzugt beweglich mit ihr verbunden. Durch den Kopplungsmechanismus ist das Verstellen der Ladehilfe in die Normalposition kausal an das Verstellen der Bindeeinheit in die Betriebsposition gekoppelt. Das heißt wird die Bindeeinheit entsprechend verstellt, sorgt der Kopplungsmechanismus für die Verstellung der Ladehilfe. Die entsprechende Verstellung muss also nicht vom Benutzer eigens vorgenommen werden. Somit kann auch eine Bindematerialrolle, die auf der Ladehilfe aufliegt, durch die Wirkung des Kopplungsmechanismus in die Rollenaufnahme befördert werden, ohne dass der Benutzer dies in einem eigenen Arbeitsschritt erledigen muss. Vielmehr kann die Bindematerialrolle von der Ladehilfe in die Rollenaufnahme befördert werden. Der Handlungsablauf vereinfacht sich und es kann Zeit eingespart werden. Sofern der Benutzer die Bindeeinheit händisch verstellt, kann ein durch das gleichzeitige Verstellen der Ladehilfe eventuell auftretender größerer Kraftaufwand durch geeignete mechanische Mittel, zum Beispiel einen großen Hebelarm, vermieden werden. Ein solcher Hebelarm kann sich an der Bindeeinheit leichter realisieren lassen als an der Ladehilfe, da letztere in aller Regel deutlich kleiner baut. Sofern die Bindeeinheit aktorisch verstellbar ist, ergeben sich weitere Vorteile. Der Benutzer ist von händischen Verstellvorgängen komplett entlastet. Insbesondere kann auch die Bindematerialrolle ohne Krafteinsatz des Benutzers in die Rollenaufnahme verbracht werden. Die Ladehilfe wird durch den Kopplungsmechanismus bevorzugt aus der Stützposition in die Normalposition verstellt. Dies schließt allerdings nicht aus, dass die Ladehilfe durch den Kopplungsmechanismus aus einer Zwischenposition (zwischen Normalposition und Stützposition) in die Normalposition verstellt werden kann. Auch ist es denkbar, dass sich die Ladehilfe bereits in der Normalposition befindet, wenn die Bindeeinheit in der Ladeposition ist. In diesem Fall erfolgt beim Verstellen der Bindeeinheit in die Betriebsposition kein Verstellen der Ladehilfe.

Abgesehen von den hier genannten Elementen kann die Bindeeinheit eine Zuführeinheit aufweisen, durch die Bindematerial von der Rollenaufnahme in Richtung der Presskammer heranführbar ist. Die Zuführeinheit führt das Bindematerial in Richtung der Presskammer heran, also zur Presskammer hin, so dass der Ballen dort mit dem Bindematerial gebunden beziehungsweise umwickelt werden kann. Dabei ist es nicht notwendig, dass die Zuführeinheit das Bindematerial bis unmittelbar an oder gar in die Presskammer führt. Ein Teil des Zuführens kann durch ein anderes Element (zum Beispiel ein Presselement) erfolgen, an welches die Zuführeinheit das Bindematerial übergibt. Das von der Bindematerialrolle entnommene Bindematerial wird normalerweise über eine oder mehrere Umlenkrollen geleitet, die zur Zuführeinheit gehören. Die Zuführeinheit kann wenigstens teilweise gegenüber dem Bindegehäuse verstellbar sein und eine Haltevorrichtung aufweisen, die dazu ausgebildet ist, einen Endbereich des Bindematerials zu halten und an die Presskammer heranzuführen. Alternativ zu einer Kopplung an den Verstellvorgang der Bindeeinheit wäre auch ein Kopplungsmechanismus denkbar, der das Verstellen der Ladehilfe an ein Verstellen der Zuführeinheit koppelt. Wenn die Zuführeinheit verstellt wird, zum Beispiel indem die oben genannte Haltevorrichtung an die Presskammer herangeführt wird, erfolgt auch ein Verstellen der Ladehilfe in die Normalposition.

Bevorzugt ist die Bindeeinheit in der Ladeposition wenigstens überwiegend weiter vom Rahmen entfernt ist als in der Betriebsposition. Dadurch, dass die Bindeeinheit in der Betriebsposition wenigstens überwiegend, ggf. auch insgesamt, näher am Rahmen angeordnet ist, kann das Zuführen von Bindematerial zur Presskammer erleichtert oder je nach Ausführungsform überhaupt erst ermöglicht werden. Umgekehrt ist die Bindeeinheit in der Ladeposition wenigstens überwiegend, ggf. auch insgesamt, weiter vom Rahmen entfernt, was i.Allg. die Zugänglichkeit für das Ein- oder Ausladen einer Bindematerialrolle verbessert. Je nach Ausführungsform können Bereiche der Bindeeinheit in beiden Positionen den gleichen Abstand vom Rahmen aufweisen oder sogar in der Ladeposition näher am Rahmen angeordnet sein. Wenigstens überwiegend ist die Bindeeinheit allerdings in der Betriebsposition näher am Rahmen angeordnet. Insbesondere kann das Bindegehäuse in der Ladeposition wenigstens überwiegend weiter vom Rahmen entfernt sein als in der Betriebsposition. Sofern die Bindeeinheit vor der Presskammer angeordnet ist, entspricht bevorzugt die Betriebsposition einer hinteren Position und die Ladeposition einer vorderen Position.

Die Erfindung entlastet den Benutzer von der Aufgabe, die Bindematerialrolle in einem eigenen Arbeitsschritt in die Rollenaufnahme zu befördern, wobei er bevorzugt durch einen aktorischen Antrieb unterstützt werden kann. Dies ist besonders vorteilhaft, wenn die vergleichsweise schwere Bindematerialrolle angehoben werden muss. Eine vorteilhafte Ausführungsform sieht daher vor, dass die Bindematerialrolle durch Verstellen der Ladehilfe in die Normalposition bezüglich der Hochachse anhebbar ist. Normalerweise ist eine zusammengesetzte Bewegung mit Bewegungsanteilen entlang der Hochachse und solchen entlang der Längsachse notwendig. Insbesondere die vertikalen Bewegungsanteile lassen sich nur mühsam durch unmittelbar händisches Bewegen der Bindematerialrolle und/oder der Ladehilfe realisieren. entsprechendes Anheben durch die Ladehilfe, die erfindungsgemäß "automatisch" zusammen mit der Bindeeinheit verstellt wird, besonders vorteilhaft ist. Bei dieser Ausführungsform wird die Ladehilfe beim Verstellen in die Normalposition wenigstens teilweise aufwärts verstellt.

Grundsätzlich kann die Verstellung der Ladehilfe auf einer translatorischen und/oder einer rotatorischen Bewegung beruhen. Eine bevorzugte Ausführungsform sieht vor, dass die Ladehilfe durch Schwenken um eine bezüglich des Bindegehäuses ortsfeste Ladehilfe-Schwenkachse zwischen der Stützposition und der Normalposition verstellbar ist. Das heißt, es handelt sich hierbei um eine rein rotatorische Bewegung. Das Verstellen in die Stützposition entspricht dabei regelmäßig einem Abwärtsschwenken, während das Verstellen die Normalposition einem Aufwärtsschwenken entspricht. Beim Aufwärtsschwenken kann insbesondere eine auf der Ladehilfe abgestützte Bindematerialrolle mit angehoben und in die Rollenaufnahme gebracht werden. Zudem kann die aufwärts geschwenkte Ladehilfe, nachdem sie in der Normalposition arretiert wurde, als zusätzliche Absicherung für die Bindematerialrolle dienen.

Bevorzugt wird durch den Kopplungsmechanismus eine Antriebskraft eines Bindeeinheit-Aktors, welcher das Verstellen der Bindeeinheit in die Betriebsposition bewirkt, wenigstens anteilig mechanisch zur Ladehilfe übertragen, um diese in die Normalposition zu verstellen. Das heißt die Antriebskraft des Bindeeinheit-Aktors dient zum einen dazu, die Bindeeinheit in die Betriebsposition zu verstellen, zum anderen wird sie (teilweise, ggf. auch vollständig) durch den Kopplungsmechanismus zur Ladehilfe übertragen, wo sie deren Verstellung in die Normalposition bewirkt. Der Kopplungsmechanismus wirkt dabei rein passiv, das heißt er erzeugt selbst keine Antriebsleistung. Eine mechanische "Übertragung" der Antriebskraft schließt hierbei die Möglichkeit ein, dass die Kraft durch Unter- oder Übersetzung verstärkt oder verringert wird.

Bevorzugt wirkt der Kopplungsmechanismus mit der Bindeeinheit sowie mit dem Rahmen zusammen, wodurch ein Verstellen des Kopplungsmechanismus an ein Verstellen der Bindeeinheit zwangsgekoppelt ist. Insbesondere kann der Kopplungsmechanismus sowohl mit der Bindeeinheit als auch mit dem Rahmen beweglich verbunden sein. Die Kopplung an die Bindeeinheit ist vorteilhaft eine Kopplung an das Bindegehäuse. Durch die Kopplung erfolgt beim Verstellen der Bindeeinheit relativ zum Rahmen zwangsläufig ein Verstellen des Kopplungsmechanismus. Letzteres wird wiederum genutzt, um die Ladehilfe zu verstellen.

Es wäre möglich, dass der Verstellvorgang der Ladehilfe in beide Richtungen an den Verstellvorgang der Bindeeinheit gekoppelt ist. Dies würde allerdings bedeuten, dass die Ladehilfe unmittelbar in die Stützposition verstellt wird, wann immer die Bindeeinheit in die Ladeposition verstellt wird, was situationsabhängig Nachteile mit sich bringen könnte. Bevorzugt ist der Kopplungsmechanismus derart ausgebildet, dass die Bindeeinheit in die Ladeposition verstellbar ist, während die Ladehilfe in der Normalposition verbleibt, und die Ladehilfe in die Stützposition verstellbar ist, wenn die Bindeeinheit in der Ladeposition ist. Das heißt, während die Bindeeinheit aus der Betriebsposition in die Ladeposition verstellt wird, kann die Ladehilfe in der Normalposition verbleiben. Insofern ist keine Zwangskopplung über den Kopplungsmechanismus gegeben. Wenn die Bindeeinheit in der Ladeposition ist, kann die Ladehilfe in die Stützposition verstellt werden, das heißt auch insofern ist keine Zwangskopplung gegeben. Der Benutzer kann somit entscheiden, ob und wann er die Ladehilfe verstellen möchte. Zumindest bis die Bindeeinheit in der Ladeposition angekommen ist, kann die Ladehilfe in der Normalposition verbleiben, wodurch sie beispielsweise die Bindematerialrolle zumindest ergänzend absichern kann. Bevorzugt ist die Ladehilfe erst dann vollständig in die Stützposition verstellbar, wenn die Bindeeinheit die Ladeposition erreicht hat. Wenngleich die Ladehilfe in der Normalposition verbleiben kann, während die Bindeeinheit in die Ladeposition verstellt wird, ist es alternativ auch denkbar, dass sie, durch den Kopplungsmechanismus geführt, nach und nach in die Stützposition verstellt wird, während die Bindeeinheit in die Ladeposition verstellt wird. Dafür muss eine Arretierung der Ladehilfe - soweit vorhanden - gelöst werden, während die Bindeeinheit in der Betriebsposition ist. Die Bewegung der Bindeeinheit beziehungsweise der Ladehilfe ist dabei eine Umkehrung der Verstellbewegung in die Betriebsposition beziehungsweise Normalposition. Der Kopplungsmechanismus treibt dabei allerdings die Bewegung der Ladehilfe in die Stützposition nicht an, vielmehr kann diese je nach Ausführungsform zum Beispiel durch das Eigengewicht der Ladehilfe und/oder das Gewicht der Bindematerialrolle bewirkt werden. Der Kopplungsmechanismus kann zum Beispiel dafür sorgen, dass ein Absenken in die Stützposition kontrolliert erfolgt. In einigen Ausführungsformen wird dabei die Bindematerialrolle aufgrund ihres Eigengewichts gleichzeitig kontrolliert aus der Rollenaufnahme auf die Ladehilfe überführt.

Bevorzugt weist der Kopplungsmechanismus ein Zugelement auf, welches dazu ausgebildet ist, durch Zugübertragung die Ladehilfe in die Normalposition zu verstellen. Das Zugelement kann entweder direkt mit der Ladehilfe verbunden sein oder indirekt über wenigstens ein zwischengeordnetes weiteres Element. Wenn die Bindeeinheit in die Betriebsposition verstellt wird, überträgt das Zugelement eine Zugkraft, die dazu führt, dass die Ladehilfe in die Normalposition verstellt wird. Die Zugkraft kann, muss aber nicht, an der Ladehilfe selbst ansetzen. Wie nachfolgend noch ausgeführt wird, ist das Zugelement zur Zugübertragung vorgesehen, allerdings unter Umständen nicht zur Druckübertragung. Hierdurch kann beispielsweise die oben beschriebene Entkopplung des Verstellens der Ladehilfe vom Verstellen der Bindeeinheit in die Ladeposition erreicht werden.

Es wäre denkbar, dass das Zugelement zum Beispiel biegeschlaff als Seil oder Kette ausgebildet ist, so dass es eine Zugkraft übertragen kann aber im Wesentlichen keine Druckkraft überträgt. Eine andere vorteilhafte Ausführungsform sieht vor, dass das Zugelement als starre Zugstange ausgebildet ist. "Starr" bedeutet, dass im Betriebszustand allenfalls Verformungen auftreten, die vernachlässigbar und/oder für die Funktion des Kopplungsmechanismus unwesentlich sind. Dies schließt nicht aus, dass die Zugstange zum Beispiel zwei Teile aufweisen kann, die gegeneinander verstellt und für den Betrieb in einer bestimmten Position arretiert werden können. Hierdurch kann beispielsweise eine Längenanpassung der Zugstange vorgenommen werden. Insbesondere kann die Zugstange aus Stahl bestehen, es wären allerdings auch andere Materialien denkbar. Die Stange kann wenigstens abschnittsweise gerade ausgebildet sein, aber auch gekrümmt oder abgewinkelt.

Vorteilhaft ist das Zugelement mit einem Umlenkhebel verbunden, der um eine Umlenkhebel-Schwenkachse schwenkbar an der Bindeeinheit angeordnet ist, wobei ein Koppelstab schwenkbar mit dem Umlenkhebel sowie mit dem Rahmen verbunden ist. Der Begriff "Umlenkhebel" ist in diesem Zusammenhang nicht einschränkend auszulegen, allerdings wird durch den Umlenkhebel vorteilhaft eine Kraftumlenkung zwischen dem Koppelstab einerseits und dem Zugelement andererseits erreicht. Das Zugelement ist bevorzugt beweglich mit dem Umlenkhebel verbunden, insbesondere schwenkbar. Letzteres gilt namentlich dann, wenn es sich um die Zugstange handelt. Der Koppelstab ist sowohl mit dem Umlenkhebel als auch mit dem Rahmen schwenkbar verbunden. Er verhält sich während des Betriebs der Rundballenpresse in sich starr und definiert somit einen gleichbleibenden Abstand zwischen seinen Schwenklagern. Allerdings ist es möglich, dass er aus zwei Teilen besteht, die gegeneinander verstellbar und in einer Position zueinander arretierbar sind. Auf diese Weise kann der Benutzer bei Bedarf den Koppelstab neu justieren und somit den Abstand zwischen den Schwenklagern variieren, zum Beispiel um Bauteiltoleranzen auszugleichen. Der Begriff "Koppelstab" ist nicht einschränkend hinsichtlich der Form auszulegen, allerdings ist der Koppelstab bevorzugt länglich und gerade ausgebildet. Der Umlenkhebel ist mit der Bindeeinheit verbunden, bevorzugt mit dem Bindegehäuse. Bewegt sich die Bindeeinheit gegenüber dem Rahmen, wird der Umlenkhebel durch den Koppelstab ausgelenkt, woraus wiederum eine Auslenkung des Zugelements resultiert.

Es kann wünschenswert sein, einen vergleichsweise großen Schwenkwinkel der Ladehilfe zu realisieren, obwohl in dem Bereich des Koppelstabs nur ein vergleichsweise kleiner Verstellweg und/oder Verstellwinkel zwischen Bindeeinheit und Rahmen gegeben ist. Dies kann durch eine geeignete Kraftübertragung und Übersetzung erreicht werden. Gemäß einer Ausführungsform ist vorgesehen, dass der Koppelstab in einem ersten Abstand von der Umlenkhebel-Schwenkachse am Umlenkhebel ansetzt und das Zugelement in einem zweiten Abstand am Umlenkhebel ansetzt und in einem dritten Abstand von der Ladehilfe-Schwenkachse an der Ladehilfe ansetzt, wobei der zweite Abstand größer als der erste Abstand und/oder der dritte Abstand ist. Wenn der zweite Abstand größer ist als der erste Abstand, bewirkt eine kleinere Bewegung des Koppelstabs eine größere Bewegung der Zugstange. Eine Bewegung der Zugstange wiederum bewirkt eine (winkelmäßig) umso größere Schwenkbewegung der Ladehilfe, je kleiner der dritte Abstand ist. Mit wenigstens einer der genannten Relationen, insbesondere mit beiden, wird der Schwenkwinkel der Ladehilfe effektiv maximiert.

Vorteilhaft weist der Kopplungsmechanismus ein zweites Führungselement und ein wenigstens indirekt mit der Ladehilfe verbundenes erstes Führungselement auf, wobei die Führungselemente geführt gegeneinander verschiebbar sind bis in eine Anschlagposition, in welcher über das erste Führungselement eine Kraft zum Verstellen der Ladehilfe in die Normalposition übertragbar ist. Das heißt die Führungselemente sind in einem gewissen Bereich gegeneinander verschiebbar, wobei sie allerdings relativ zueinander geführt sind, also nicht beliebig verschiebbar sind. Wird allerdings eine Anschlagposition erreicht, kommt es zu einem Formschluss, so dass eine weitere Verschiebung in dieser Richtung nicht möglich ist. Durch das Erreichen der Anschlagposition und den hiermit verbundenen Formschluss kann eine Kraft zum Verstellen der Ladehilfe in die Normalposition übertragen werden. Eines der Führungselemente, insbesondere das erste Führungselement, kann starr mit der Ladehilfe verbunden oder sogar einstückig mit dieser ausgebildet sein.

Insbesondere kann das zweite Führungselement als Führungskulisse an der Zugstange ausgebildet sein und das erste Führungselement als in die Führungskulisse eingreifendes Läuferelement ausgebildet sein. Die Führungskulisse kann zum Beispiel als Führungsschlitz in der Zugstange ausgebildet sein. Das Läuferelement kann zum Beispiel als Stift ausgebildet sein, der in die Führungskulisse eingreift und in dieser verschiebbar ist. Wenn das Läuferelement das Ende der Führungskulisse erreicht, entspricht dies der Anschlagposition. In dieser Position kann die Zugstange über das Läuferelement die oben genannte Zugkraft auf die Ladehilfe übertragen. Das Läuferelement kann unmittelbar an der Ladehilfe angeordnet oder sogar einstückig mit dieser ausgebildet sein.

Wie bereits erläutert, dient die Rollenaufnahme zur Abstützung der Bindematerialrolle und sollte insofern im Betriebszustand eine möglichst gleichbleibende Stützstruktur bilden. Daher ist im Stand der Technik die Rollenaufnahme vollständig mit dem Binderahmen verbunden. Eine vorteilhafte Ausgestaltung der Erfindung sieht allerdings vor, dass die Rollenaufnahme ein zur Abstützung der Bindematerialrolle ausgebildetes Stützelement aufweist, welches an der Ladehilfe angeordnet und mit dieser zusammen verstellbar ist. Das Stützelement ist entweder starr oder beweglich mit der Ladehilfe verbunden und insofern nur indirekt mit dem Binderahmen. Wenn die Ladehilfe zwischen der Stützposition und der Normalposition verstellt wird, führt dies zwangsläufig zu einer Verstellung des Stützelements gegenüber dem Rahmen. Insbesondere kann das Stützelement bezüglich der Hochrichtung wenigstens anteilig abgesenkt werden, wenn die Ladehilfe in die Stützposition verstellt wird. Hierdurch ist es leichter, die Bindematerialrolle zum Beispiel händisch aus der Rollenaufnahme zu entnehmen. Evtl. kann die Bindematerialrolle sogar durch ihr Eigengewicht auf die Ladehilfe rollen, nachdem das Stützelement wenigstens teilweise abgesenkt wurde.

Gemäß einer Ausführungsform ist das Stützelement als drehbar an der Ladehilfe gelagerte Stützrolle ausgebildet. Die Stützrolle ist gegenüber dem Bindegehäuse um eine Stützrollen-Drehachse drehbar. Die Stützrollen-Drehachse ist ebenfalls normalerweise parallel zur Querachse. Durch die Drehbarkeit der Stützrolle kann die Bindematerialrolle anteilig auf der Stützrolle abgestützt sein und sich drehen, während die Stützrolle sich in entgegengesetzter Richtung dreht. Das heißt die Bindematerialrolle und die Stützrolle rollen aneinander ab, ohne dass sich die Positionen ihrer Drehachsen (wesentlich) ändern. Beim Umladen einer Bindematerialrolle aus der Rollenaufnahme in die Ladehilfe ist es im Stand der Technik notwendig, die Bindematerialrolle über die Stützrolle hinweg zu ziehen, was dadurch erschwert wird, dass die Stützrolle keine feste Unterlage bildet, sondern sich weiterdrehen kann. Wird allerdings die Stützrolle mit der Ladehilfe verstellt, wobei sie bevorzugt abgesenkt wird, wenn die Ladehilfe in die Stützposition verstellt wird, kann die Bindematerialrolle wesentlich leichter über die Stützrolle hinweg bewegt werden oder im Idealfall sogar durch ihr Eigengewicht über die Stützrolle auf die Ladehilfe rollen. Umgekehrt wird das Einladen einer neuen Bindematerialrolle erleichtert, wenn die Stützrolle nicht am Binderahmen gelagert ist, sondern zusammen mit der Ladehilfe verstellt wird, wobei sie bevorzugt angehoben wird.

Es versteht sich, dass die Rollenaufnahme neben der Stützrolle wenigstens ein weiteres Element aufweisen muss, um eine stabile Aufnahme der Bindematerialrolle zu gewährleisten. Hierbei kann es sich insbesondere um eine Bremsrolle handeln, die um eine Bremsrollen-Drehachse drehbar gelagert ist und dazu eingerichtet ist, radial außenseitig an der Bindematerialrolle anzugreifen, um diese zu bremsen, und die dazu eingerichtet ist, die Bindematerialrolle gemeinsam mit der Stützrolle abzustützen. Die Bremsrolle dient einerseits dazu, zusammen mit der Stützrolle die Bindematerialrolle abzustützen. Dabei liegt die Bindematerialrolle einerseits auf der Stützrolle und andererseits auf der Bremsrolle auf und wird durch beide anteilig gestützt. Wie die Stützrolle ist auch die Bremsrolle drehbar gelagert, um ein Abrollen der Bindematerialrolle zu ermöglichen. Eine weitere Funktion der Bremsrolle besteht darin, das Bindematerial beim Abrollen zu bremsen und zu dehnen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer ersten erfindungsgemäßen Rundballenpresse mit einer Bindeanordnung in einer ersten Position;
- Fig. 2: eine perspektivische Darstellung der Bindeanordnung aus Fig. 1 in der ersten Position;
- Fig. 3: eine Seitenansicht eines Teils der Rundballenpresse mit der Bindeanordnung in der ersten Position;
- Fig. 4: eine Seitenansicht eines Teils der Rundballenpresse mit der Bindeanordnung in einer zweiten Position; sowie
- Fig. 5: eine Seitenansicht eines Teils der Rundballenpresse mit der Bindeanordnung in einer dritten Position.

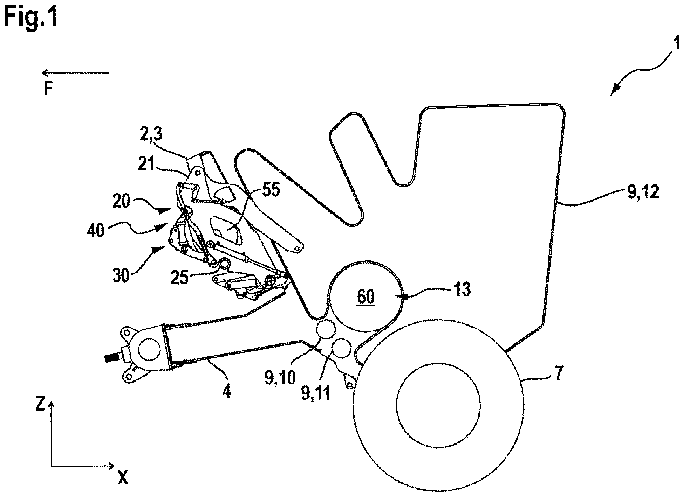

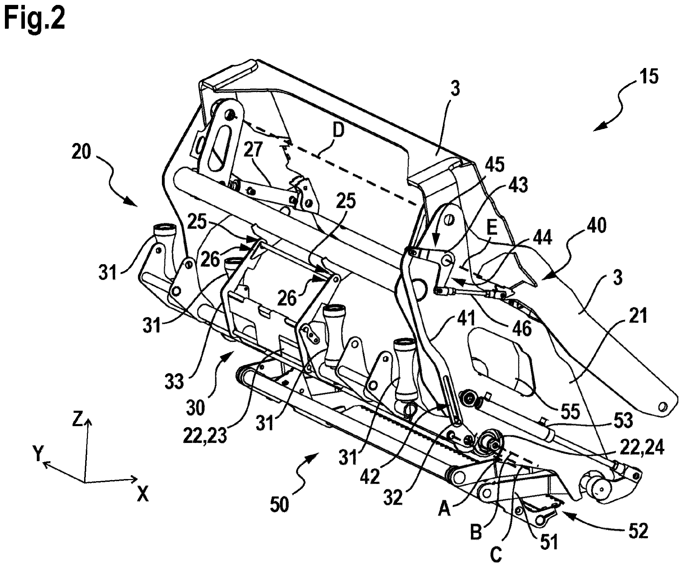

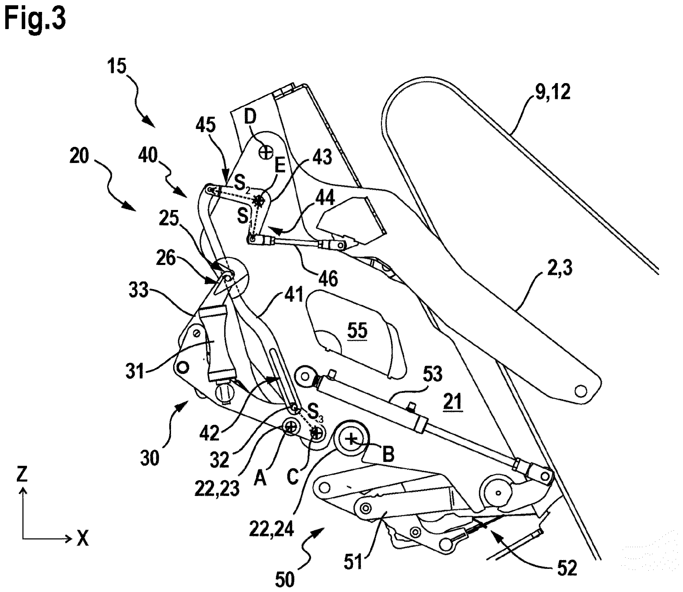

Fig. 1 - 5 zeigen eine Ausführungsform einer erfindungsgemäßen Rundballenpresse 1. Diese weist einen Rahmen 2 auf, der ihr insgesamt strukturelle Stabilität verleiht. Der Rahmen 2 ist auf hier schematisch dargestellten Laufrädern 7 abgestützt. In einer Fahrtrichtung F vorderseitig ist am Rahmen 2 ein Deichsel-Anbindungsbereich 4 ausgebildet. An diesem ist eine nicht dargestellte Deichsel angeordnet, über welche die Rundballenpresse 1 mit einem ebenfalls nicht dargestellten Schlepper verbunden werden kann. In den Figuren sind jeweils eine entgegen der Fahrtrichtung F nach hinten weisende Längsachse X, eine in Fahrtrichtung gesehen nach rechts weisende Querachse Y sowie eine nach oben weisende Hochachse Z der Rundballenpresse 1 eingezeichnet. Die Darstellung in Fig.1 ist vereinfacht und verschiedene Elemente, die nicht wesentlich für die vorliegende Erfindung sind, wurden weggelassen oder nicht mit Bezugszeichen versehen. Hierzu zählt eine auf Hilfsrädern abgestützte Pick-up, mit welcher Erntegut vom Boden aufgenommen und über einen Zuführkanal weiter zu einem Förderrotor befördert wird. Der Förderrotor, der auch als Schneidrotor ausgebildet sein kann, befördert das Erntegut durch den Zuführkanal weiter zu einer Presskammer 13 innerhalb des Rahmens 2. Die Presskammer 13 wird durch eine Pressvorrichtung 9 ausgebildet, von welcher zwei Walzen 10, 11 sowie ein Pressriemen 12 dargestellt sind. Der Pressriemen 12 ist in geeigneter Weise durch Führungsrollen geführt, die hier aus Gründen der Übersichtlichkeit nicht dargestellt sind. Auch ein Gehäuse, das die Pressvorrichtung 9 umgibt und das am Rahmen 2 befestigt ist, wurde weggelassen.

Fig.1 zeigt einen Zustand während der Formung eines Ballens 60, genauer gesagt, einer Anfangsphase der Formung. Wenn der Ballen 60 in der Presskammer 13 fertiggestellt wurde, wird er mit Bindematerial umwickelt, wozu die Rundballenpresse eine Bindeeinheit 20 aufweist. Die Bindeeinheit 20 ist verstellbar mit einer

Bindungsbrücke 3 des Rahmens 2 verbunden. Sie weist ein Bindegehäuse 21 auf, in welchem eine Rollenaufnahme 22 angeordnet ist. Diese ist dazu ausgebildet, eine Bindematerialrolle 55 drehbar aufzunehmen. Zur Abstützung der Bindematerialrolle 55 weist die Rollenaufnahme 22 eine Stützrolle 23 auf sowie eine Bremsrolle 24. Die Bremsrolle 24 ist um eine Bremsrolle-Drehachse B drehbar am Bindegehäuse 21 gelagert, während die Stützrolle 23 um eine Stützrollen-Drehachse A drehbar an einer Ladehilfe 30 gelagert ist, welche nachfolgend noch beschrieben wird. Beide Drehachsen A, B verlaufen parallel zur Querachse Y.

Über eine Zuführeinheit 50, welche ein Zuführpendel 51 mit einem endseitig angeordneten Zuführschnabel 52 aufweist, kann Bindematerial, welches von der Bindematerialrolle 55 abgewickelt wurde, in Richtung auf die Presskammer 13 geführt werden. Das Zuführpendel 51 ist mittels eines Zuführeinheit-Aktors 53 schwenkbar. Ihre genaue Funktion ist zum Verständnis der Erfindung nicht relevant und wird daher nicht weiter erläutert. Die in der Rollenaufnahme 22 aufgenommene Bindematerialrolle 55 dreht sich, während das Bindematerial abgewickelt wird. Um das abgewickelte Bindematerial zu straffen und zu dehnen, wird die Drehbewegung der Bindematerialrolle 55 abgebremst. Hierzu dient die Bremsrolle 24, die an eine in den Figuren nicht dargestellte Bremse gekoppelt ist. Die Bremsrolle 24 kann beispielsweise eine Mantelfläche aus Gummi aufweisen, die mit einem hohen Reibungskoeffizienten mit dem Bindematerial auf der Bindematerialrolle 55 zusammenwirkt.

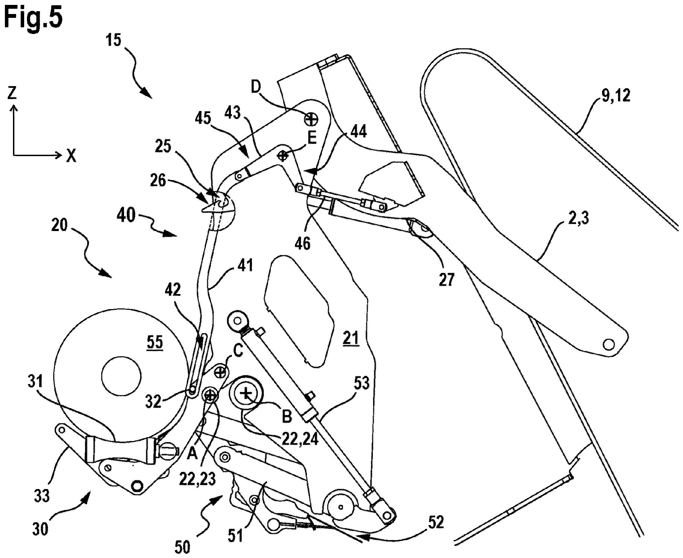

Bezüglich der Längsachse X in Fahrtrichtung F vor der Rollenaufnahme 22 ist die oben genannte Ladehilfe 30 am Bindegehäuse 21 angeordnet. Die Ladehilfe 30 ist um eine Ladehilfe-Schwenkachse C gegenüber dem Bindegehäuse 21 schwenkbar. Somit ist sie verstellbar zwischen einer in Fig. 1 bis 3 dargestellten Normalposition und einer in Fig. 5 dargestellten Stützposition. Die Normalposition ist für den normalen Betriebszustand vorgesehen, wenn die Bindematerialrolle 55 in der Rollenaufnahme 22 aufgenommen ist. Dabei erstreckt sich die Ladehilfe 30 überwiegend von der Ladehilfe-Schwenkachse C aus bezüglich der Hochachse Z aufwärts. Sie bildet bezüglich der Längsachse X vor der Bindematerialrolle 55 eine Absicherung, die beispielsweise bei stark abschüssigen Gelände oder bei einer Bremsung verhindert, dass die Bindematerialrolle 55 nach vorne aus der Rollenaufnahme 22 herausfällt.

Die Ladehilfe 30 ist mittels eines schwenkbaren Verriegelungsbügels 33 in der Normalposition arretierbar. Die Arretierung erfolgt, indem der Verriegelungsbügel 33 in zwei Verriegelungsöffnungen 25 eingreift, die am Bindegehäuse 21 ausgebildet sind. Wird der Verriegelungsbügel 33 aus den Verriegelungsöffnungen 25 herausgehoben, wird die Ladehilfe 30 entriegelt und kann in die Stützposition geschwenkt werden, in welcher sie sich von der Ladehilfe-Schwenkachse C aus überwiegend nach vorne erstreckt und näherungsweise waagerecht ausgerichtet ist. Dabei bildet sie eine Unterlage zur Abstützung der Bindematerialrolle 55, wenn diese ein- oder ausgeladen werden soll. Die Ladehilfe 30 weist vier Laderollen 31 auf, die um Drehachsen drehbar gelagert sind, die sich jeweils senkrecht zur Querachse Y erstrecken. Daher lässt sich die aufliegende Bindematerialrolle 55 in Richtung der Querachse Y leicht über die Laderollen 31 bewegen, was ein Auf- und Abladen von der Seite wesentlich erleichtert. Die Bindeeinheit 20 ist gegenüber dem Rahmen 2, genauer gesagt, gegenüber der Bindungsbrücke 3, zwischen einer in Fig.1 bis 3 dargestellten Betriebsposition und einer in Fig.5 dargestellten Ladeposition verstellbar. Dies geschieht durch aktorisches Schwenken um eine parallel zur Querachse Y verlaufende Bindeeinheit-Schwenkachse D. Ein Bindeeinheit-Aktor 27 - in diesem Fall ein Hydraulikzylinder - treibt die Schwenkbewegung an.

Der Rahmen 2, das Bindegehäuse 21 und die Ladehilfe 30 sind durch einen Kopplungsmechanismus 40 verbunden. Dabei bilden die Bindeeinheit 20, die Ladehilfe 30, der Kopplungsmechanismus 40 Teile einer Bindeanordnung 15. Der Kopplungsmechanismus 40 weist eine Zugstange 41 auf, einen Umlenkhebel 43 sowie einen Koppelstab 46, welche jeweils in sich starr ausgebildet sind. Die Zugstange 41 weist eine Führungskulisse 42 auf, die ein erstes Führungselement bildet. In der Führungskulisse 42 ist ein Läuferelement 32 der Ladehilfe 30 geführt aufgenommen, welches ein zweites Führungselement bildet. An einem gegenüberliegenden Ende ist die Zugstange 41 schwenkbar mit dem Umlenkhebel 43 verbunden, der seinerseits um eine Umlenkhebel-Schwenkachse E schwenkbar mit dem Bindegehäuse 21 verbunden ist. Der Koppelstab 46 einerseits ist schwenkbar mit dem Umlenkhebel 43 und andererseits schwenkbar mit dem Rahmen 2 verbunden. Wird die Bindeeinheit 20 mittels des Bindeeinheit-Aktors 27 aus der Betriebsposition in Richtung der Ladeposition geschwenkt, wird über den Koppelstab 46 ein Drehmoment auf den Umlenkhebel 43 ausgeübt. Hierdurch bewegt sich ein erster Hebelarm 44, an welchem der Koppelstab 46 angreift, relativ zum Bindegehäuse 21 bezüglich der Längsachse X nach hinten, während sich ein in etwa rechtwinklig hierzu verlaufender zweiter Hebelarm 45 bezüglich der Hochachse Z abwärts bewegt. Es erfolgt somit eine Bewegungsumlenkung.

Außerdem ist ein erster Abstand S₁ von der Umlenkhebel-Schwenkachse E, in dem der Koppelstab 46 am Umlenkhebel 44 ansetzt, kleiner als ein zweiter Abstand S₂, in dem die Zugstange 41 am Umlenkhebel 44 ansetzt. Somit wird eine Übersetzung der Bewegung erreicht. Der zweite Abstand S₂ ist außerdem größer als ein dritter Abstand S₃ von der Ladehilfe-Schwenkachse, in dem das Zugelement (über das Läuferelement) an der Ladehilfe ansetzt. Letzteres ist beim Schwenken in die Ladeposition allerdings nicht relevant, da die sich abwärts bewegende Zugstange 41 mit der Führungskulisse 42 am Läuferelement 32 vorbeigleitet. Es wird somit kein nennenswertes Drehmoment auf die Ladehilfe ausgeübt. Wenn die Bindeeinheit 20 in der Ladeposition angekommen ist, kann ein Benutzer den Verriegelungsbügel 33 manuell entriegeln und die Ladehilfe 30 in die Stützposition schwenken. Dabei bewegt sich das Läuferelement 32 wiederum entlang der Führungskulisse 42 und die Zugstange 41 schwenkt gegenüber dem Umlenkhebel 43. Die Stützrolle 23, auf der die Bindematerialrolle 55 teilweise aufliegt, schwenkt zusammen mit der Ladehilfe 30 abwärts, wodurch die Bindematerialrolle 55 wesentlich leichter aus der Rollenaufnahme 22 auf die Ladehilfe 30 verladen werden kann oder ggf. von selbst auf die Ladehilfe 30 rollt.

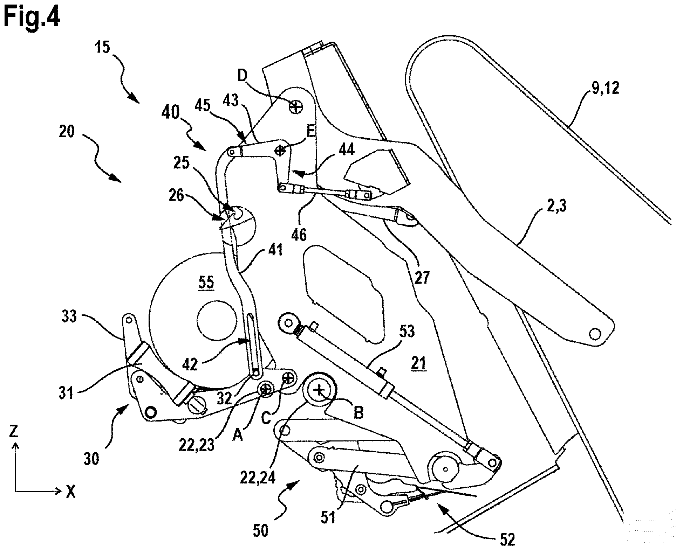

Um eine Bindematerialrolle 55 aufzuladen, wird diese zunächst von der Seite über die Laderollen 31 auf die Ladehilfe 30 aufgeschoben. Mechanisch wäre es möglich, die Ladehilfe 30 manuell in die Normalposition zu schwenken, dies wäre aber für den Benutzer anstrengend. Vorteilhaft wird einfach der Bindeeinheit-Aktor 27 aktiviert, um die Bindeeinheit 20 in Richtung der Betriebsposition zu schwenken. Hierdurch wird über den Koppelstab 46 wieder ein Drehmoment auf den Umlenkhebel 43 ausgeübt, der nunmehr die Zugstange 41 bezüglich der Hochachse Z anhebt. Da die Führungskulisse 42 und das Läuferelement 32 bereits in einer Anschlagposition sind, wirkt unmittelbar eine Kraft auf das Läuferelement 32 und somit ein Drehmoment auf die Ladehilfe 30. Die Ladehilfe 30 schwenkt daher aufwärts in Richtung der Normalposition, wobei die in Fig.4 gezeigte Zwischenposition durchlaufen wird. Da der oben genannte zweite Abstand S₂ größer als der erste Abstand S₁ und der dritte Abstand S₃ ist, wird eine "Übersetzung" der Schwenkbewegung der Bindeeinheit 20 erreicht, das heißt obwohl die Bindeeinheit 20 insgesamt nur um einen Winkel von ca.30° schwenkt, wird eine Schwenkbewegung der Ladehilfe 30 um einen Winkel von ca. 110° erreicht. Die Bindematerialrolle 55 wird durch die Ladehilfe 30 angehoben und nach hinten in die Rollenaufnahme 22 befördert. Bei Annäherung an die Normalposition wird der Verriegelungsbügel 33 mittels zweier Führungsflächen 26 ausgelenkt, welche an die Verriegelungsöffnungen 25 angrenzen. Schließlich fällt der Verriegelungsbügel 33 in die Verriegelungsöffnungen 25, wenn die Bindeeinheit 20 die Betriebsposition erreicht und die Ladehilfe 30 die Normalposition erreicht.

Abweichend von der gezeigten erfindungsgemäßen Ausgestaltung wäre es auch denkbar, einen Kopplungsmechanismus vorzusehen, der an die Zuführeinheit 50 gekoppelt ist und die Ladehilfe 30 zusammen mit der Zuführeinheit 50 verstellt. ZUM BEISPIEL könnte die Ladehilfe 30 durch den Kopplungsmechanismus in die Normalposition verstellt werden, wenn das Zuführpendel 51 mittels des Zuführeinheit-Aktors 53 so geschwenkt wird, dass sich der Zuführschnabel 52 der Presskammer 13 annähert.

## Patentansprüche

1. Rundballenpresse (1), mit einem Rahmen (2), einer Pressvorrichtung (9) zum Pressen von landwirtschaftlichem Erntegut zu einem Ballen (60) in einer Presskammer (13), sowie einer Bindeeinheit (20), die gegenüber dem Rahmen (2) verstellbar ist zwischen einer Betriebsposition und einer Ladeposition und die ein Bindegehäuse (21) aufweist, eine wenigstens teilweise im Bindegehäuse (21) angeordnete Rollenaufnahme (22) zur drehbaren Aufnahme einer Bindematerialrolle (55), sowie eine Ladehilfe (30), die gegenüber dem Bindegehäuse (21) verstellbar ist zwischen einer Stützposition, in welcher die Bindematerialrolle (55) auf ihr abstützbar ist, und einer Normalposition,
**dadurch gekennzeichnet, dass**
ein Kopplungsmechanismus (40) derart mit der Ladehilfe (30) zusammenwirkt, dass beim Verstellen der Bindeeinheit (20) aus der Ladeposition in die Betriebsposition die Ladehilfe (30) durch den Kopplungsmechanismus (40) in die Normalposition verstellt wird.

2. Rundballenpresse (1) nach Anspruch 1, **dadurch gekennzeichnet, dass** die Bindeeinheit (20) in der Ladeposition wenigstens überwiegend weiter vom Rahmen (2) entfernt ist als in der Betriebsposition.

3. Rundballenpresse (1) nach einem der vorangehenden Ansprüche, **dadurch gekennzeichnet, dass** die Bindematerialrolle (55) durch Verstellen der Ladehilfe (30) in die Normalposition bezüglich einer Hochachse (Z) anhebbar ist.

4. Rundballenpresse (1) nach einem der vorangehenden Ansprüche, **dadurch gekennzeichnet, dass** die Ladehilfe (30) durch Schwenken um eine bezüglich des Bindegehäuses (21) ortsfeste Ladehilfe-Schwenkachse (C) zwischen der Stützposition und der Normalposition verstellbar ist.

5. Rundballenpresse (1) nach einem der vorangehenden Ansprüche, **dadurch gekennzeichnet, dass** durch den Kopplungsmechanismus (40) eine Antriebskraft eines Bindeeinheit-Aktors (27), welcher das Verstellen der Bindeeinheit (20) in die Betriebsposition bewirkt, wenigstens anteilig mechanisch zur Ladehilfe (30) übertragen wird, um diese in die Normalposition zu verstellen.

6. Rundballenpresse (1) nach einem der vorangehenden Ansprüche, **dadurch gekennzeichnet, dass** der Kopplungsmechanismus (40) mit der Bindeeinheit (20) sowie mit dem Rahmen (2) zusammenwirkt, wodurch ein Verstellen des Kopplungsmechanismus (40) an ein Verstellen der Bindeeinheit (20) zwangsgekoppelt ist.

7. Rundballenpresse (1) nach einem der vorangehenden Ansprüche, **dadurch gekennzeichnet, dass** der Kopplungsmechanismus (40) derart ausgebildet ist, dass die Bindeeinheit (20) in die Ladeposition verstellbar ist, während die Ladehilfe (30) in der Normalposition verbleibt, und die Ladehilfe (30) in die Stützposition verstellbar ist, wenn die Bindeeinheit (20) in der Ladeposition ist.

8. Rundballenpresse (1) nach einem der vorangehenden Ansprüche, **dadurch gekennzeichnet, dass** der Kopplungsmechanismus (40) ein Zugelement (41) aufweist, welches dazu ausgebildet ist, durch Zugübertragung die Ladehilfe (30) in die Normalposition zu verstellen.

9. Rundballenpresse (1) nach einem der vorangehenden Ansprüche, **dadurch gekennzeichnet, dass** das Zugelement (41) als starre Zugstange ausgebildet ist.

10. Rundballenpresse (1) nach einem der vorangehenden Ansprüche, **dadurch gekennzeichnet, dass** das Zugelement (41) mit einem Umlenkhebel (43) verbunden ist, der um eine Umlenkhebel-Schwenkachse (E) schwenkbar an der Bindeeinheit (20) angeordnet ist, wobei ein Koppelstab (46) schwenkbar mit dem Umlenkhebel (43) sowie mit dem Rahmen (2) verbunden ist.

11. Rundballenpresse (1) nach einem der vorangehenden Ansprüche, **dadurch gekennzeichnet, dass** der Koppelstab (46) in einem ersten Abstand (S₁) von der Umlenkhebel-Schwenkachse (E) am Umlenkhebel (43) ansetzt und das Zugelement (41) in einem zweiten Abstand (S₂) am Umlenkhebel (43) ansetzt und in einem dritten Abstand (S₃) von der Ladehilfe-Schwenkachse (C) an der Ladehilfe (30) ansetzt, wobei der zweite Abstand (S₂) größer als der erste Abstand (S₁) und/oder der dritte Abstand (S₃) ist.

12. Rundballenpresse (1) nach einem der vorangehenden Ansprüche, **dadurch gekennzeichnet, dass** der Kopplungsmechanismus (40) ein erstes Führungselement (42) und ein wenigstens indirekt mit der Ladehilfe (30) verbundenes zweites Führungselement (32) aufweist, wobei die Führungselemente (32, 42) gegeneinander geführt verschiebbar sind bis in eine Anschlagposition, in welcher über das zweite Führungselement (32) eine Kraft zum Verstellen der Ladehilfe (30) in die Normalposition übertragbar ist.

13. Rundballenpresse (1) nach einem der vorangehenden Ansprüche, **dadurch gekennzeichnet, dass** das erste Führungselement (42) als Führungskulisse an der Zugstange (41) ausgebildet ist und das zweite Führungselement (32) als in die Führungskulisse eingreifendes Läuferelement ausgebildet ist.

14. Rundballenpresse (1) nach einem der vorangehenden Ansprüche, **dadurch gekennzeichnet, dass** die Rollenaufnahme (22) ein zur Abstützung der Bindematerialrolle (55) ausgebildetes Stützelement (23) aufweist, welches an der Ladehilfe (30) angeordnet und mit dieser zusammen verstellbar ist.

15. Rundballenpresse (1) nach einem der vorangehenden Ansprüche, **dadurch gekennzeichnet, dass** das Stützelement (23) als drehbar an der Ladehilfe (30) gelagerte Stützrolle ausgebildet ist.
